# EUROPEAN PATENT APPLICATION

(11) **EP 1 649 753 A1**
(43) Date of publication of application: **26.04.2006**
(21) Application number: 04425796.2
(22) Date of filing: 25.10.2004
(51) Int. Cl.: A22B 3/02, F41C 23/10

(54) **Stunning pistol**

(71) Applicant: Mazzoleri, Santo, 26025 Pandino (Cremona) (IT)
(72) Inventor: Mazzoleri, Santo, 26025 Pandino (Cremona) (IT)
(74) Representative: Crippa, Paolo Ernesto

(57) **Abstract**

A stunning pistol (4) for the slaughter of livestock, comprising a barrel unit (8) and a reinforcement (48), which may be associated to the barrel unit (8) to form a hand grip (50) for the pistol (4). Said hand grip (50) is light and resistant, so as to guarantee an easy handling of the weapon and at the same time ward off the risk of accidental breakages during its use.

## Description

This invention regards a stunning pistol, in other words a pistol used for slaughtering animals including a piston which, operated by the detonation of a cartridge, perforates the cranium of an animal causing its instant death.

As is well-known, in slaughterhouses, thousands of animals are slaughtered each day via the manual use of such stunning pistols. Fundamental requirements for the pistol are therefore lightness, to avoid excessive fatigue for the operator, and reliability due to the considerable and repeated stresses to which the weapon is subjected daily.

The pistols of the well-known type are sufficiently light but not very reliable, as after intensive use they display sudden breakages at the level of the hand grip. Such breakages, apart from making the pistol unusable, involve great risks for the safety of the user.

The problem of this invention is that of realising a stunning pistol which resolves the inconveniences quoted with reference to the well-known technique.

Such inconveniences and limitations are resolved by a stunning pistol in accordance with claim 1.

Other embodiments of the stunning pistol according to the invention are described in the subsequent claims.

Further characteristics and the advantages of this invention are more comprehensible from the description included below of one of its preferred and not limited embodiments, in which:

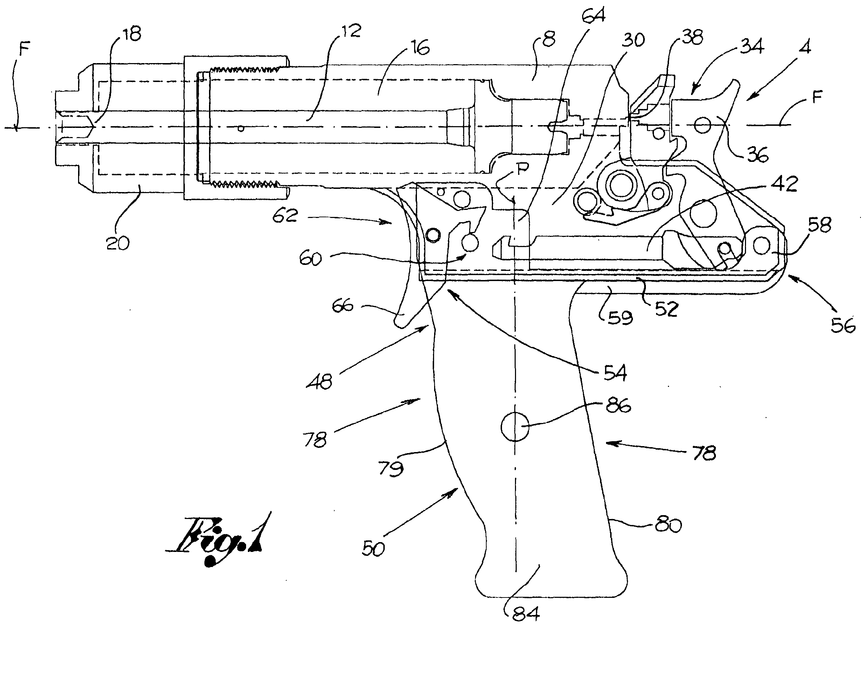

Figure 1 represents a lateral view, with a partial section, of a stunning pistol according to this invention;

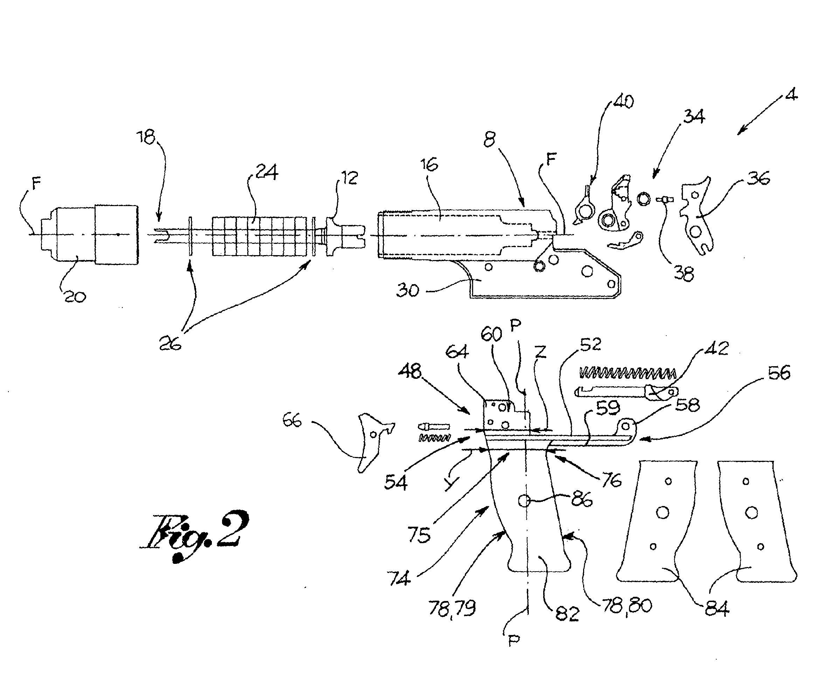

Figure 2 represents a view of separate parts of the pistol in Figure 1;

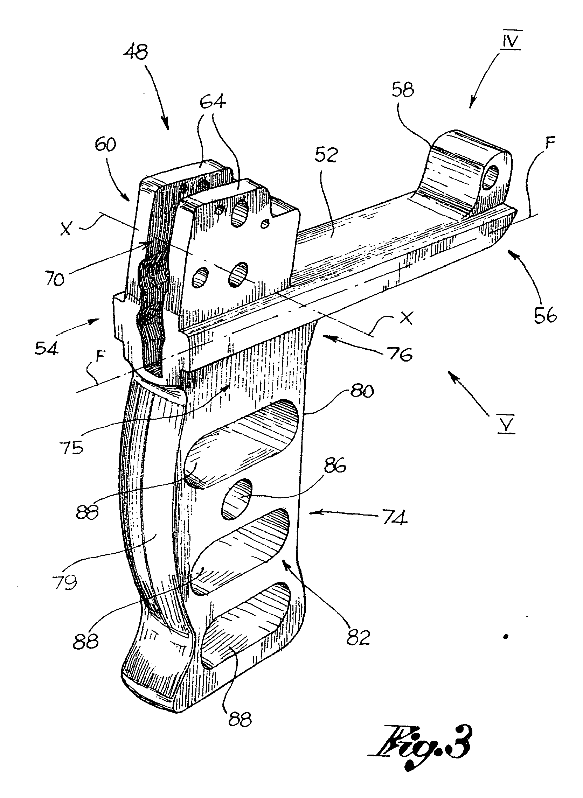

Figure 3 represents a perspective view of a detail of the pistol in Figure 1;

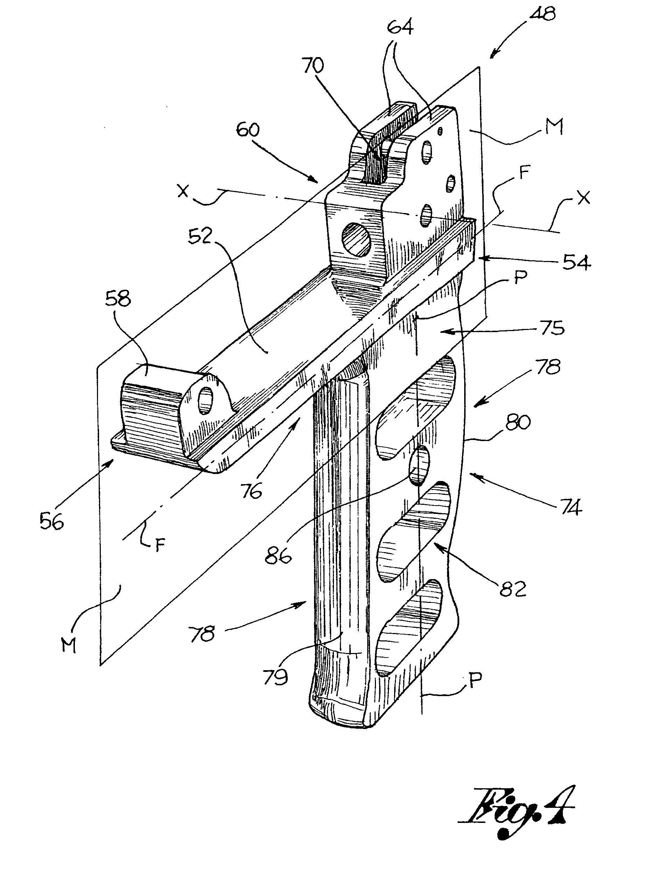

Figure 4 represents a further perspective view of the detail of Figure 3, from the side of arrow IV of Figure 3; and

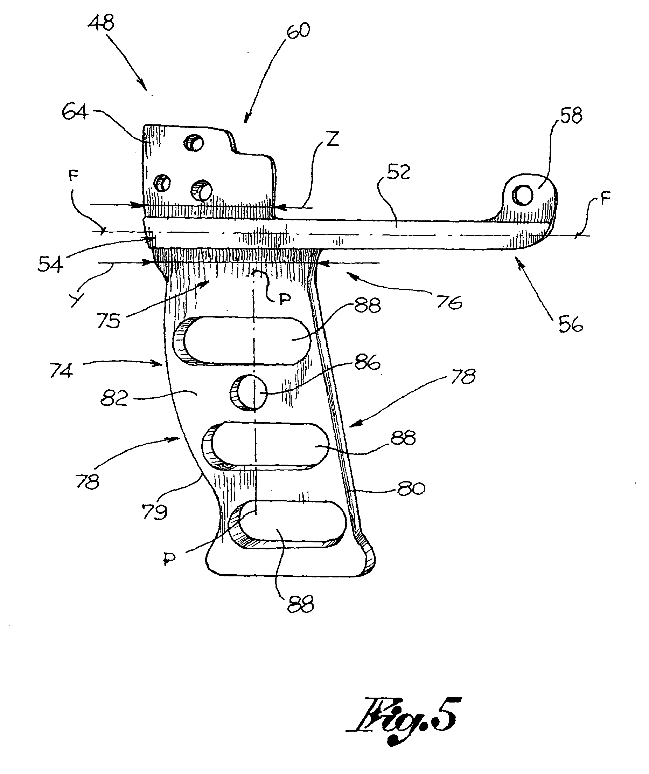

Figure 5 represents a lateral view of the detail of Figure 3, from the side of arrow V of Figure 3.

The elements or parts of elements in common between the embodiments described below shall be indicated with the same numerical references.

With reference to the abovementioned figures, with 4 a stunning pistol has been generically indicated.

The pistol 4 comprises a barrel unit 8 adapted to house a piston 12 inside a chamber 16 directed along a shooting direction F. The chamber 16 is adapted to house a cartridge to exercise, when activated, a pushing action on the piston 12, which slides along in the shooting direction F.

The piston 12, on the opposite side to the cartridge, comprises a breaking-through extremity 18, so that, under the pushing action of the gases liberated by the deflagration of the cartridge, the piston 12 slides axially along the shooting direction F until the breaking-through extremity 18 protrudes from the chamber in a pre-determined amount to impact against the cranium of an animal to be slaughtered. The barrel unit 8 comprises, from the part of the breaking-through extremity 18, a cover 20 adapted to form an end-stop for said piston 12.

The contact between the piston 12 and the cover 20 is softened by a series of recovery buffers 24 delimited by a pair of washers 26.

The barrel unit 8 is fitted with a plate 30 to which a shooting mechanism 34 is connected comprising among other things a hammer 36, a striker 38 adapted to activate the cartridge, an extractor 40, a cocking lever 42, adapted to arm the hammer 36 and any safety mechanisms against accidental shooting.

The pistol 4 also comprises a reinforcement 48, which may be associated to the barrel unit 8 and in particular to the plate 30, said reinforcement 48 being adapted to form a hand grip 50 for the pistol 4.

The reinforcement 48 preferably comprises a centre line M, passing via the shooting direction F. Preferably, the centre line M is also a plane of symmetry for the reinforcement 48 and for the chamber 16 of the barrel unit 8.

In particular, the reinforcement 48 comprises a connecting bar 52, mechanically connected to the barrel unit 8, said connecting bar 52 extending parallel to the shooting direction F by an anterior extremity 54, facing the piston 12 and a posterior extremity 56, opposing the anterior extremity and the piston 12.

At the level of the posterior extremity 56, the connecting bar 52 comprises a fin 58 adapted to be connected to the plate 30 of the barrel unit 8 via, for example, detachable pivots or screws.

According to an advantageous embodiment, the connecting bar 52 comprises a support 59 arranged parallel to the shooting direction F, from the opposite side of the barrel unit 8.

The reinforcement 48 comprises a support section 60 for activating mechanisms 62 to activate the shooting mechanism 34 of the pistol 4. According to one embodiment, the support section 60 comprises a pair of terminal plates 64 adapted to support said activating mechanisms 52, comprising, among other things, a trigger 66 adapted to cooperate with the cocking lever 42 and with the hammer 36.

The centre line M identifies, perpendicularly to the shooting direction F, a hand grip direction P. With axial direction X, a direction perpendicular to the shooting direction F and to the hand grip direction P is indicated, as well as perpendicular to the centre line M.

With respect to said axial direction X, perpendicular to the shooting direction F and to the hand grip direction P, the terminal plates 64 are facing each other, preferably symmetrical with respect to the centre line M. The terminal plates 64 delimt an area 70 adapted to house at least partially the plate 30 of the barrel unit 8 and the activating mechanisms 62.

The support section 60 is preferably arranged at the level of said anterior extremity of the connecting bar 52 and is facing the associable barrel unit 8, in other words it extends from the connecting bar 52 towards the barrel unit 8.

The reinforcement 48 comprises a grip section 74 to allow manual gripping of the pistol, said grip section 74 connecting to the connecting bar 52 at the level of an attachment section 75. According to one embodiment, the grip section 74 is arranged at the level of the anterior extremity 54 of the connecting bar 52 and on the opposite side to the support section 60, in other words the grip section 74 extends mainly from the connecting bar 52 distancing itself from the associable barrel unit 8.

Said grip section 74 extends along the grip direction P substantially perpendicular to the shooting direction F and has a width of grip section Y, parallel to said shooting direction F, substantially equal to the overall dimension of the grip 50 of the pistol 4, so as to comprise grip surfaces 78 adapted to be gripped directly.

Advantageously, the width of the grip section Y, at the level of the attachment section 75, is greater than a width of the support section Z, parallel to the shooting direction F.

Advantageously, the support section 60 and the grip section 74 are aligned with respect to the anterior extremity 54 of the connecting bar 52.

In other words, both the grip section 74 and the support section 60 are arranged at the level of the anterior extremity 54 of the connecting bar 52 and are aligned between them by the part of the anterior extremity 54. The grip section 74 has a width of grip section Y greater than the width of the support section Z, so that the grip section 74 interfaces with the connecting bar 52 for a greater section of the support section 60.

Preferably, the attachment portion 75 comprises a joint 76 connecting the bar 52, on the side of the posterior extremity 56.

Advantageously, the grip section 74 with respect to the shooting direction F is delimited by the grip surfaces 78 adapted to be gripped directly, in particular an anterior grip surface 79 facing towards the anterior extremity 54, and a posterior grip surface 80, facing towards the posterior extremity 56.

Preferably, said support 59 extends from said posterior grip surface 80 to said posterior extremity 56 of the connecting bar 52.

With respect to the axial direction X, the grip portion 74 is delimited by a pair of support surfaces 82 substantially flat and parallel to each other.

Each of said support surfaces 82 is adapted to receive the impact of a grip 84 adapted to cover at least partially the grip section 74 and to guarantee better gripping of the pistol 4.

According to one embodiment, said grips 84 are associated to the grip section 74 by detachable connecting mechanisms, such as screws or pivots passing through at least one fixing hole 86 on the grip section 74.

The grips 84 are advantageously shaped with respect to the support surfaces 82 so that an external profile of the grips, with respect to a plane parallel with the centre line M, substantially fits against one profile of the support surfaces 82.

In other words, following application of the grips 84 on the grip section 74, the support surfaces 82 are at least partially covered by the grips 84, while the grip surfaces 78 are not covered by the grips 84 and may therefore be held directly by an operator.

Preferably the grip surfaces 78 are shaped according to ergonomic forms in order to make the grip easier. For example the posterior grip surface 80 is substantially flat, to favour contact with the palm of a hand, while the anterior grip surface 79 has a curved shape, preferably concave towards the piston 12, so as to favour contact with the fingers of a hand.

Advantageously, the grip section 74 comprises at least one opening 88, for example in the form of slots arranged parallel to the shooting direction.

Said openings 88 may also be used as holes for blocking the grips 84 in the grip section 74.

The functioning of the stunning pistol according to the invention will now be described.

In particular, after having introduced a cartridge into the related chamber 16 and having cocked the hammer 36, it is possible to activate the shooting mechanism 34 by acting on the appropriate trigger 66. In this way the hammer 36 activates the striker 38 which deflagrates the cartridge. The cartridge includes the firing capsule and the load release, but is without a bullet; it must in fact only generate pushing gases. The gases thus developed act on the piston 12 which is pushed along the shooting direction F, to the exit of the related chamber 16.

The breaking-through extremity 18 of the piston 12, previously rested on the cranium of the animal, penetrates the cranium itself by a pre-determined amount, thanks to the recovery buffers 24 which, coming into contact with the cover 20, stop the trajectory of the piston 12.

Due to the backward movement generated following the shot, the barrel unit 8 receives a push along the shooting direction F in the opposite direction to the direction of advancement of the piston 12. Such push is transmitted to the reinforcement 48 and in particular generates a substantially shear stress g between the connecting bar 52 and the grip section 74.

As may be appreciated from the above description, the stunning pistol described enables the inconveniences presented by stunning pistols with the well-known technique to be overcome.

In particular, the pistol described is light and easy to handle and at the same time is safe and reliable for the user.

In fact, the grip is particularly resistant in particular in the attachment section to the barrel unit.

Further, the pistol according to the invention enables a firm and secure grip. In other words, the wide grip enables a firm grip and also the grip itself does not include mobile parts, embedded for example, which after prolonged use of the weapon, tend to move from their relative seats thus impeding a safe and ergonomic grip of the weapon.

Thanks to the substantial perpendicularity between the grip section and the connecting bar, following a shot, the attachment section of the grip section with the bar is stressed substantially from the side; in this way the occurrence of cracks at the level of this attachment section is warded off, in particular from the part of the anterior grip surface.

The grip section according to this invention is therefore a single piece with the connecting bar so as to form a single grip to which the grips are applied.

The grip is therefore a rigid unit with the bar and limits the relative movements of the grip section with respect to the hand of a user, even after a shot.

A person skilled in the art, in order to satisfy contingent and specific needs, may make numerous modifications and variations to the above-described stunning pistol, all contained in the context of the invention as defined by the following claims.

## Claims

1. Stunning pistol (4), adapted to slaughter livestock, comprising
A barrel unit (8) adapted to house a piston (12) arranged along a shooting direction (F) and a cartridge to carry out, when activated, a pushing action on the piston (12), moving along said shooting direction (F),
A reinforcement (48), which may be associated to a barrel unit (8), to form a grip (50) for the pistol (4),
Said reinforcement (48) comprising
A connecting bar (52), mechanically connected to the barrel unit (8) and extending parallel to the shooting direction (F) by an anterior extremity (54) facing towards the piston (12) to a posterior extremity (56) opposing the anterior extremity (54),
A support section (60) of activating mechanisms (62) to activate a shooting mechanism (34) of the pistol (4), arranged at the level of the anterior extremity (54) of the bar (52) and facing towards the barrel unit (8),
A grip section (74) to allow gripping of the pistol (4) arranged at the level of the anterior extremity (54) on the opposite side to the support section (60)
In which
Said grip section (74), on a level with an attachment section (75) to the connecting bar (52), extends along a grip direction (P) substantially perpendicular to said shooting direction (F)
And has a width of grip section (Y) parallel to said shooting direction (F), substantially equal to the overall dimension of the grip (50) of the pistol (4) so as to comprise grip surfaces (78, 79, 80) adapted to be gripped directly.

2. Stunning pistol (4) according to claim 1, wherein said width of the grip section (Y) is greater than a width of the support section (Z), parallel to the shooting direction (F).

3. Stunning pistol (4) according to claim 2, wherein said support section (60) and said grip section (74) are aligned with respect to the anterior extremity (54) of the connecting bar (52).

4. Stunning pistol (4) according to any of the previous claims, wherein said attachment section (75) comprises a joint (76) connecting to the connecting bar (52), on the side of the posterior extremity (56).

5. Stunning pistol (4) according to any of the previous claims, wherein the connecting bar (52) comprises a support (59) arranged parallel to the shooting direction (F), on the opposite side to the barrel section (8).

6. Stunning pistol (4) according to claim 5, wherein said support (59) extends from said grip section (74) to said posterior extremity (56) of the connecting bar (52).

7. Stunning pistol (4) according to any of the previous claims, wherein the grip section (74), with respect to the shooting direction (F), is delimited by an anterior grip section (79) facing towards the anterior extremity (54) and a posterior grip section (80), facing towards the posterior extremity (56).

8. Stunning pistol (4) according to claim 7, wherein the posterior grip section (80) is substantially flat, to favour contact with the palm of a hand, and the anterior grip surface (79) has a curved shape, to favour contact with the fingers of a hand.

9. Stunning pistol (4) according to any of the previous claims, wherein the grip section (74), with respect to an axial direction (X) perpendicular to said shooting direction (F) and said grip direction (P), is delimited by a pair of support surfaces (82), substantially flat and parallel to each other.

10. Stunning pistol (4) according to claim 9, wherein each of said support surfaces (82) is associated in contact with a grip (84) adapted to cover at least partially the grip section (74).

11. Stunning pistol (4) according to claim 10, wherein said grips (84) are associated to the grip section (74) by detachable connection mechanisms passing through at least one fixing hole (86) on the grip section (74).

12. Stunning pistol according to claim 10 or 11, wherein the grips (84), with respect to a defined plane of the shooting direction (F) and the grip direction (P), are shaped with respect to the support surfaces (82) so that one external profile of the grips (84) substantially fits against an external profile of the support surfaces (82).

13. Stunning pistol (4) according to any of the above claims, wherein said grip section (74) comprises at least one opening (88).

14. Stunning pistol (4) according to claim 13, wherein said openings (88) comprise at least one slot arranged parallel to the shooting direction (F) .
